# EUROPEAN PATENT APPLICATION

(11) **EP 2 209 318 A1**
(43) Date of publication of application: **21.07.2010**
(21) Application number: 09150500.8
(22) Date of filing: 14.01.2009
(51) Int. Cl.: H04N 7/26

(54) **Spatiotemporal 3D (de) compression with non-matching picture prediction**

(71) Applicant: Koninklijke Philips Electronics N.V., 5621 BA Eindhoven (NL); Philips Intellectual Property & Standards, 20099 Hamburg (DE)
(72) Inventor: The designation of the inventor has not yet been filed
(74) Representative: Schmitz, Herman Jan Renier

(57) **Abstract**

A new 3D video encoding principle which allows prediction of a picture of a given time moment and viewing direction from a picture of a different time moment and a different viewing direction allows better compression.

## Description

### FIELD OF THE INVENTION

The invention relates to a method of (de)compressing 3D or multiview video sequences, a corresponding video (de)compression apparatus (typically a part of an IC), and a television system comprising the video decompression apparatus and/or applying the decompression method.

### BACKGROUND OF THE INVENTION

Digital video compression has been developed in the previous decades to exploit temporal and other redundancies, to visually unimpaired encode a video sequence with fewer bits. This has led to such standards as MPEG2, or AVC. Compression of 3D sequences (by which is meant not just left/right representation, but any representation containing captured aspects of the original three dimensional world objects, e.g. how these objects look in directions on a circle around them each direction 30 degrees apart) is still under study, and the final best representations -and the corresponding ways to calculate those, in particular predict pictures on the basis of other pictures- have not been decided upon.

A similar understanding to the fact that linearly moving objects can be predicted by motion compensation from earlier decompressed pictures however, has been come to in 3D prediction, namely, one can differentially predict e.g. the right view from the fully (intra) encoded left view. In this case the "motion" is actually the parallax due the real world depth in relation to the capturing camera(s).

This is however always done either temporally, or (3D) spatially, as it would seem weird to mix the two, since then one has some non-linear mixing between how the object moves, and how in three dimensions this converts into an adjusted (increased or decreased) parallax.

### SUMMARY OF THE INVENTION

The inventor has however realized that better compression can be achieved by using an "inappropriate" second picture to predict a first picture, i.e. a second picture that not just corresponds to a different time moment, but also a different viewing direction (e.g. the right picture at t is predicted with a left picture two time moments earlier. In order to do this one may need to store those pictures for a certain amount of time so that they can later be used in the prediction, e.g. one may want to store all the B frames of the right direction/eye sequence (for its internal prediction), but not those of the left direction, or also those of the left direction, if at least some of those are also used in the prediction.

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concept, and in which dashes are used to indicate that a component is optional, non-dashed components not necessarily being essential. Dashes can also be used for indicating that elements, which are explained to be essential, are hidden in the interior of an object, or for intangible things such as e.g. electromagnetic fields.

### BRIEF DESCRIPTION OF THE DRAWINGS

In the drawings:
Fig. 1 schematically illustrates a simple combination of temporal and spatial (3D direction) prediction;
Figs. 2 and 3 schematically show exemplary embodiments of the present invention; and
Fig. 4 schematically shows a television system with the present invention; and
Fig. 5 schematically shows a compression apparatus with the present invention.

### DETAILED DESCRIPTION OF THE EMBODIMENTS

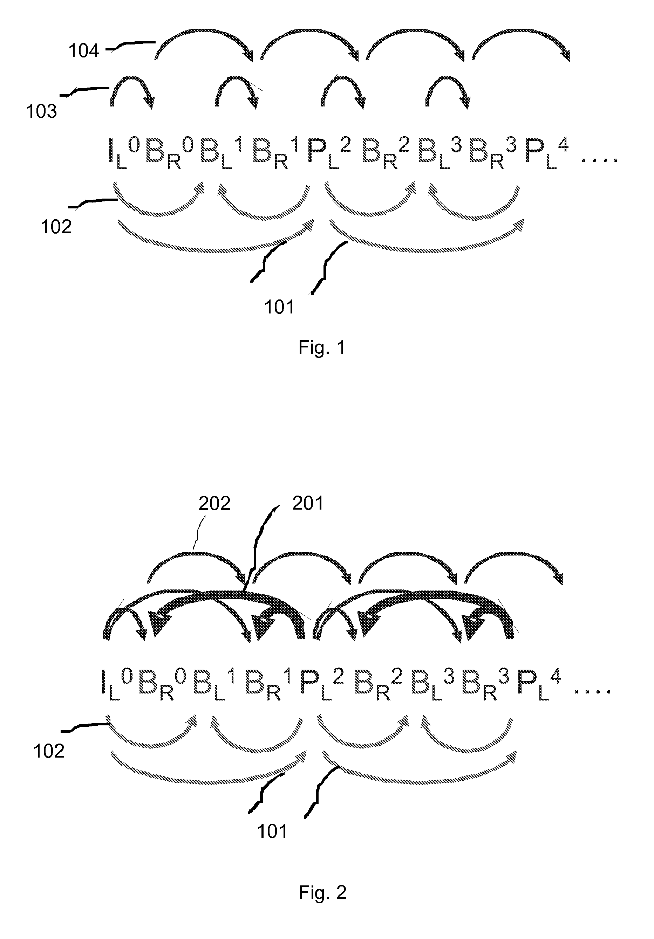

Fig. 1 shows what one can do if one integrates the classical temporal prediction of e.g. MPEG2 and 3D prediction, e.g. from left to right pictures. The arrows 101 show the prediction of P-pictures from intra (I) pictures, all for the master temporal sequence, namely the left sequence. This encoding mode also allows bidirectional predicted B-pictures, e.g. B_{L}¹ , which is predicted from its two temporal neighbors in the left direction sequence, the intro picture I_{L}⁰ (arrow 102), and the P picture P_{L}².
Fig. 1 also shows that the encoder/compressor can derive, for the same time moment, the right picture from the left picture (arrow 103, symbolizes the prediction of the right picture at time moment 0, B_{R}⁰, from the left I_{L}⁰ picture, which will then be correctable to its true content with a residue, which will be the actual B_{R}⁰ picture encoded in the outgoing compressed sequence for that 0 time moment). One could also use already available (decompressed) B pictures of the right sequence (i.e. typically pre-derived from the left sequence) to temporally predict (at least as a co-input, i.e. the picture B_{R}¹ may be predicted on the basis of a combination, e.g. a weighted average, of the data of the motion-projected blocks or regions of both B_{R}⁰ and B_{L}¹) successive right B pictures. In all these examples one predicts a picture from another picture which is either in the temporal sequence of the same viewing direction, or in another sequence of another viewing direction, but then for the same time moment. The subscript in our notation is always the viewing direction e.g. R=right (although for simplicity we draw the sequence with only two viewing directions, but the principle is the same and should be clear to a skilled reader for several, e.g. 5 viewing directions), and the superscript the time moment.

Fig. 2 shows an embodiment of the present invention. The temporal prediction of the left sequence is still the same, but for the right sequence the difference is that now e.g. B_{R}⁰ is predicted not only from a left picture of the same time instant I_{L}⁰, but also from a left picture of a different time instant, namely the left P picture P_{L}², which is two time moments in the future (arrow 201). In this example all right B pictures need to be temporarily stored (in cyclically updated memory, e.g. 2 stores per GOP), since they are used as predictors, but no B pictures from the left sequence need to be stored, since the prediction is only done on the basis of left sequence I and P pictures (which must remain available long enough). The predictor works efficiently because along (especially a long) the GOP near the end part one may use more of the within-sequence B-right prediction, but immediately after an I frame, or for occlusion, one may employ more data from the left (or other directions in general) sequence for the right sequence prediction. Also, B_{R}¹ may be predicted on the basis of e.g. I_{L}⁰ and P_{L}², and also B_{R}⁰(arrow 202). It needs to be said that, in contrast to classical bidirectional prediction, the forward and background pointing vectors are not nearly the same in magnitude, but there may be a great difference, due to the mixing of shifts due to temporal motion and parallax, but this can be perfectly integrated in a compression scheme which allows several different vectors and multiple referencing like AVC (at least two for bidirectionally predicted pictures, although several predictions may be mixed to form a more robust, compression-friendly final prediction).

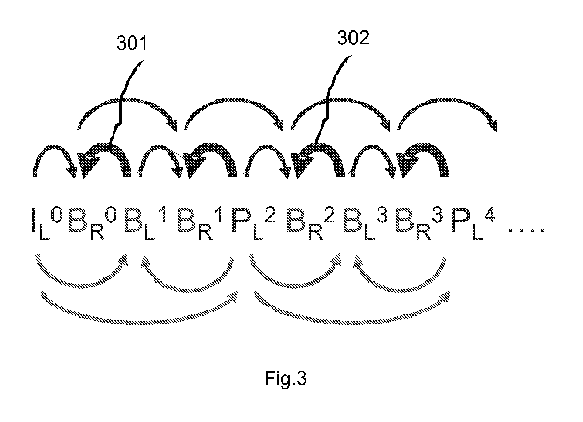

Fig. 3 shows another embodiment, which shows more versatility one can obtain in predicting any picture from any picture. In this example, also B pictures of the left sequence, e.g. B_{L}¹ to predict B_{R}⁰, are used to predict the B pictures of the right sequence (arrows 301 and 302).

The skilled reader will the present teachings understand that there are several prediction ways possible, and one could even "go back" in that one predicts e.g. some B pictures of the left sequence from pictures of the right sequence, which makes the left sequence no longer a master sequence, as long as the entire sequence can be decoded. The interleaving can happen in many ways, e.g. in a stereo sequence one may group two pictures from the same direction, i.e. LLRRLLRR..., or it may be regular as in the claim 3 embodiment, like e.g. LMRLMR (where M is a middle view direction), but it may even be a pseudorandom sequence, and one may even predict in between two co-related so interleaved partial sequences V1V2V3V1V2V3... and V4V5V6V4V5V6 (where V1 is a picture for the first direction, and V2 for a second, etc.). I.e., one can use the same principles to determine predictions between separate temporal sequences.

The skilled person can use the tools available in the present MPEG4 standard to realize the invention, but it may be interesting to use an additional flag (if a predetermined e.g. stereo interleaving is used) or in general information structure (which can specify any interleaving pattern) added to the standard to indicate which type of compressed signal is used, which flag or information need at least convey the spatiotemporal meaning of all the pictures to the receiving side (so that a picture of a second direction is not erroneously understood as a picture for a different time moment of a first direction, or pictures of directions are not swapped, which would lead to severe stereo errors). A normal, mono viewer can then select the right pictures from the interleaved sequence to obtain a correct money view for display.

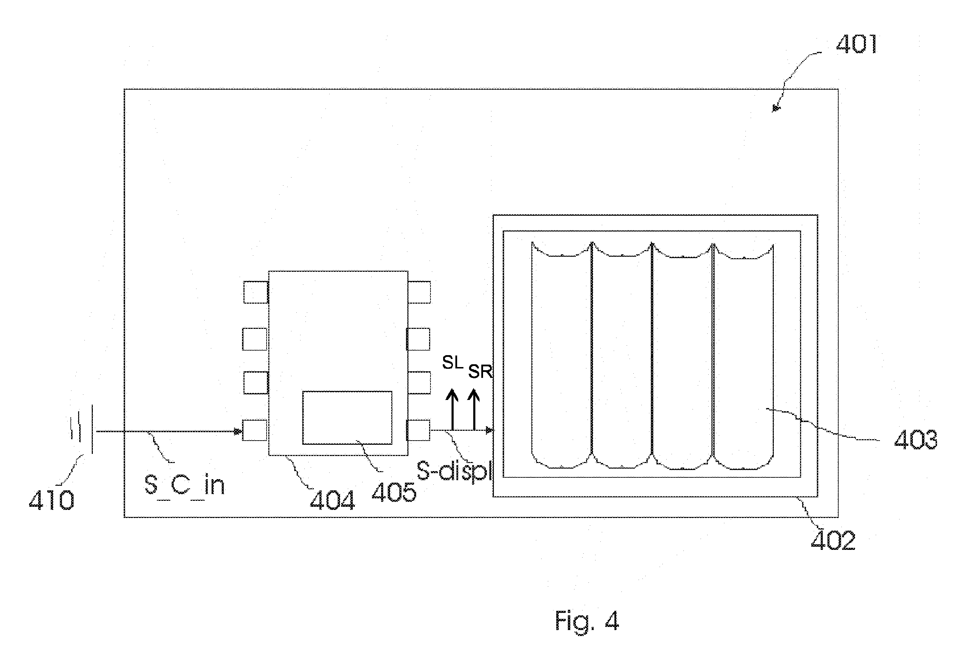

Fig. 4 schematically shows a television system 401, which may be e.g. a standalone TV. or p.c. It comprises a display unit 402, e.g. an LCD, which in this embodiment is supplied with a lenticular lens system 403, to create multiple views. The television system may also be embodied e.g. as a head on display with an LCD before the left and right eye, and a built in receiver and decompression IC, or a wireless connection to a computer system providing such. A video processing IC 404 comprises a decompression part 405, which generates a sequence of uncompressed pictures S-displ for the multiview display 402. The compressed input signal S_C_in comes from a connection 410, e.g. cable television or the internet.

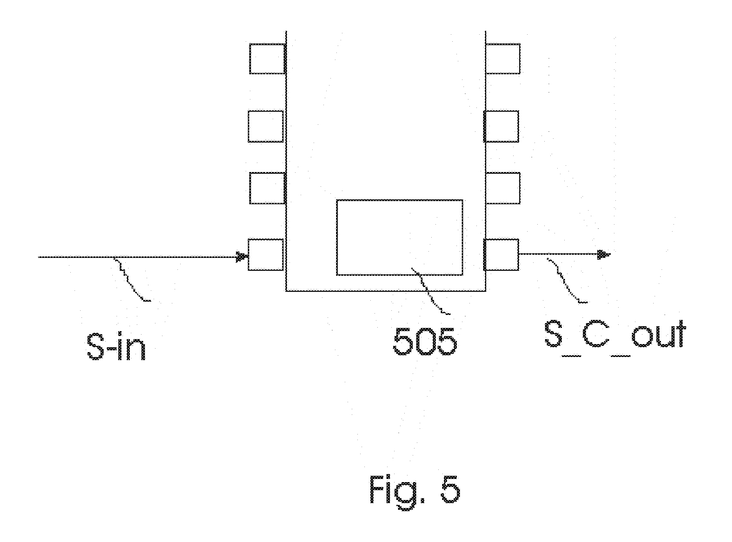

Fig. 5 schematically shows a video IC which comprises a video compression apparatus 505, which applying the principles of the present invention compresses a number of uncompressed video sequences for different viewing directions S-in into a compressed (typically interleaved) signal S_C_out with I-pictures and residues given the predictions according to the present invention.

The algorithmic components disclosed in this text may in practice be (entirely or in part) realized as hardware (e.g. parts of an application specific IC) or as software running on a special digital signal processor, or a generic processor, etc.

It should be understandable to the skilled person from our presentation which components can be optional improvements and be realized in combination with other components, and how (optional) steps of methods correspond to respective means of apparatuses, and vice versa. Apparatus in this application is used in the broadest sense presented in the dictionary, namely a group of means allowing the realization of a particular objective, and can hence e.g. be (a small part of) an IC, or a dedicated appliance, or part of a networked system, etc.

The computer program product denotation should be understood as encompassing any physical realization of a collection of commands enabling a processor-generic or special purpose-, after a series of loading steps (which may include intermediate conversion steps, like translation to an intermediate language, and a final processor language) to get the commands into the processor, to execute any of the characteristic functions of an invention. In particular, the computer program product may be realized as data on a carrier such as e.g. a disk or tape, data present in a memory, data traveling over a network connection -wired or wireless- , or program code on paper. Apart from program code, characteristic data required for the program may also be embodied as a computer program product.

Some of the steps required for the working of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other regions of the claims, we have for conciseness not in-depth mentioned all these options. Apart from combinations of elements of the invention as combined in the claims, other combinations of the elements are possible. Any combination of elements can be realized in a single dedicated element.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

## Claims

1. A method of compressing a video sequence of pictures, comprising for each time moment a number of pictures relating to respective viewing directions of a set of different viewing directions, **characterized in that** a picture of a first time moment and viewing direction is predicted on the basis of at least one second picture of a different time moment and a different viewing direction.

2. A method of compressing a video sequence of pictures as claimed in claim 1, **characterized in that** it comprises a step of forming an interleaved sequence, formed by selecting successive pictures from several temporal sequences corresponding to different respective viewing directions.

3. A method of compressing a video sequence of pictures as claimed in claim 2, **characterized in that** the of forming an interleaved sequence selects for each time moment, a single picture from each of the temporal sequences, running through the sequences in a fixed predetermined order.

4. A method of compressing a video sequence of pictures as claimed in one of the above claims, **characterized in that** it comprises a step of storing the pictures corresponding to a particular viewing direction.

5. A method of decompressing a video sequence of pictures, comprising for each time moment a number of pictures relating to respective viewing directions of a set of different viewing directions, **characterized in that** a picture of a first time moment and viewing direction is predicted on the basis of at least one second picture of a different time moment and a different viewing direction.

6. A method of decompressing a video sequence of pictures as claimed in claim 5, comprising a step of de-interleaving a decompressed video sequence (S-displ) into a number of temporal sequences (SL, SR) for creating different views by a display unit (402).

7. A video compression apparatus (505) for compressing a video sequence of pictures, comprising for each time moment a number of pictures relating to respective viewing directions of a set of different viewing directions, comprising a picture prediction unit arranged to predict a picture of a first time moment and viewing direction on the basis of at least one second picture of a different time moment and a different viewing direction.

8. A video decompression apparatus (404) for compressing a video sequence of pictures, comprising for each time moment a number of pictures relating to respective viewing directions of a set of different viewing directions, comprising a picture prediction unit arranged to predict a picture of a first time moment and viewing direction on the basis of at least one second picture of a different time moment and a different viewing direction.

9. A television system (401) comprising a video decompression apparatus a claimed in claim 7, which is arranged to output a displayable temporal sequence of pictures (S-disp1), and a display unit (402), which is arranged to display separate pictures selected from the displayable temporal sequence for at least two viewing directions.
